# EUROPEAN PATENT APPLICATION

(11) **EP 0 909 616 A1**
(43) Date of publication of application: **21.04.1999**
(21) Application number: 98911163.8
(22) Date of filing: 01.04.1998
(51) Int. Cl.: B25J 9/22

(54) **TEACHING CONTROL PANEL FOR ROBOT**

(30) Priority: 01.04.1997 JP 96380/97
(71) Applicant: FANUC LTD, Minamitsuru-gun, Yamanashi 401-0597 (JP)
(72) Inventor: TERADA, Akihiro, Yamanashi 403-0005 (JP); YASUMURA, Mitsuhiro, Minamitsuru-gun Yamanashi 401-0302 (JP); ABE, Kenichiro Fanuc Manshonharimomi, Room 14-208, Minamitsuru-gun Yamanashi 401-0511 (JP)
(74) Representative: Billington, Lawrence Emlyn
(86) International application number: JP9801510
(87) International publication number: WO9843784

(57) **Abstract**

A teaching pendant is provided with a display on the central portion of the surface of a body (10). Deadman switches (DM10, DM20) are attached to the left- and right-hand front portions of the body 10, individually. Further, bulge portions are locally formed in those regions of the inside of the body (10) that face the deadman switches (DM10, DM20) across the body (10). An operator supports the teaching pendant with one of his hands on one of the bulge portions, and operates one of the deadman switches (DM10, DM20) with the fingers of the hand.

## Description

### TECHNICAL FIELD

The present invention relates to an improvement of a teaching pendant used to instruct an industrial robot on operation.

### BACKGROUND ART

A teaching pendant is connected to a robot control device for controlling an industrial robot, and an operator holds this teaching pendant as be manipulates the robot. The teaching pendant is provided with various elements, such as switches, operation-active key, and other operating keys, as well as a display that utilizes a liquid crystal, for example.

Further, the switches attached to the teaching pendant include a deadman switch. The deadman switch is an important switch for securing the operator's safety, and serves to prohibit the robot from operating unless it is kept on by the operator. Accordingly, the operator who manipulates the robot must go on applying an operating force (force of pressure, etc.) to the deadman switch with his fingers while continually holding the teaching pendant except when stopping the robot. If the operator discontinues holding the teaching pendant and releases the deadman switch from his operating force in a normal state or in case of emergency, the robot stops unconditionally In the case of a 3-position deadman switch, it is also turned off to stop the robot when it is subjected to a particularly heavy operating force (by being depressed hard, for example).

Since the deadman switch has these properties, the operator must hold the teaching pendant without releasing the deadman switch from the operating force as he carries out operation of the switches and keys other than the deadman switch, such as the activation of the operation-active key and operation of a jog key.

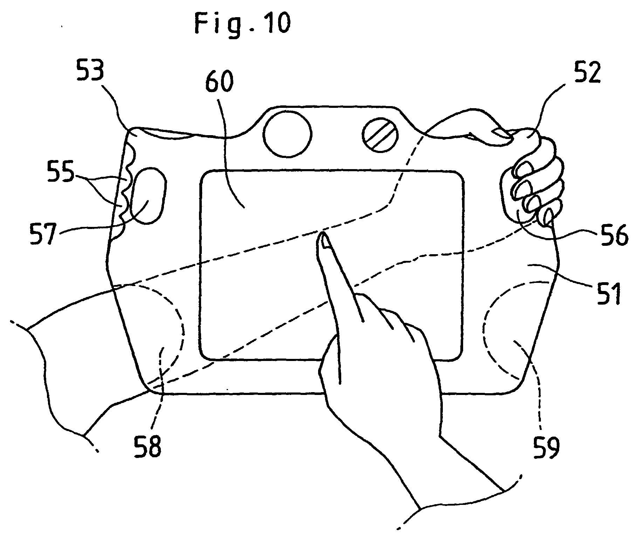

A teaching pendant provided with deadman switches of this type are disclosed in Japanese patent applications published as KOKAI Nos. 9-85659 and 9-85660, for example. In this teaching pendant, the deadman switches are attached individually to those regions of the front portion of a substantially rectangular pendant body which are situated near the left- and tight-hand ends. This conventional example will now be described with reference to FIG. 10.

A body 51 of the teaching pendant is a substantially rectangular plate that is surrounded by a front end, rear end, left-hand end, and right-hand end A liquid-crystal display 60 is arranged in the central portion of the surface of the body 51. The display 60 is provided with a panel-touch mechanism. Grip portions 52 and 53 are formed on the front portions of the tight- and left-hand ends, respectively, of the body 51. Each of the grip portions 52 and 53 is formed with recesses 55 for receiving the four fingers other than the thumb. In FIG. 10, however, the recesses of the tight-hand grip portion 52 are concealed under the operator's fingers. Deadman switches 56 and 57 are formed near the right- and left-hand grip portions 52 and 53, respectively, on the surface of the body 51.

Thus, the operator puts his left arm under the body 51 and holds the tight-hand grip portion 52 with his left hand, thereby supporting the teaching pendant, as shown in FIG. 10. In this state, the operator can operate the touch panel function with his tight hand, the more skilful hand. As this is done, the left arm is fitted in a left-hand recess 58, out of a pair of recesses 58 and 59 that are formed on the left- and right-hand sides, respectively, of the rear portion of the back surface of the body 51.

Further, the operator can also hold the left-hand grip portion 53 in his left hand without putting his left hand under the body 51 as he operates the touch panel function of the display 60 with his right hand. At this time, the left-hand deadman switch 57 is operated by the thumb of the left hand that holds the left-hand grip portion 53.

Since this teaching pendant has a bisymmetrical configuration, an operator whose left hand is more skillful than the other may only carry out the tight- and left-hand operations, which are described above, the other way around.

When the operator holds the tight-hand grip portion 52 in his left hand and places the other fingers than the thumb in the recess 55 of the grip portion 52, as shown in FIG. 10, the teaching pendant 51 is liable to slip toward the left-hand elbow although the weight of the teaching pendant 51 is supported by the left arm. This is because that portion of the inside of the teaching pendant 51 which engages the palm of the left hand has a flat surface. In order to prevent the teaching pendant 51 from slipping off the left hand, therefore, the operator must go on holding the grip portion 52 with a great force. The same applies correspondingly to the case where the right hand holds the left-hand grip portion 53 to support the teaching pendant 51. Further, the teaching pendant 51 is also liable to slip off the hand both in the case where the left-hand grip portion 53 is held by the left hand and in the case where the tight-band grip portion 52 is held by the tight hand.

### DISCLOSURE OF THE INVENTION

The object of the present invention is to provide a teaching pendant for robot, which can be reliably supported by one hand of an operator and enjoys high operability.

In order to achieve the above object, a robot teaching pendant according to the present invention comprises a teaching pendant body, a display set in the teaching pendant body, at least one deadman switch attached to the teaching pendant body and a bulge portion locally formed in the vicinity of a region of the teaching pendant body in which the deadman switch is set. Moreover, the bulge portion is located in a position such that the respective tip portions of the fingers of an operator's hand can operate it when the hand is put on the bulge portion.

According to the present invention, the deadman switch can be operated with the fingers of the hand that supports the teaching pendant, and the hand is hooked over the bulge portion formed on the teaching pendant, so that the teaching pendant is prevented from slipping off the hand. Thus, the operator can securely support the teaching pendant with little labor, so that various switching operations on the teaching pendant can be carried out with ease.

### BRIEF DESCRIPTION OF THE DRAWINGS

FIG. 1 is a bottom view of a teaching pendant according to a first embodiment of the present invention;
FIG. 2 is a side view of the teaching pendant of FIG. 1 taken in the direction of arrow A;
FIG. 3 is a top view of the teaching pendant of FIG. 1;
FIG. 4 is a view showing a profile along line C-C of FIG. 1;
FIG. 5 is a partial enlarged view for illustrating the way a deadman switch is attached to the teaching pendant of FIG. 1;
FIG. 6 is a view for illustrating a first case for the way of holding and operating the teaching pendant of FIG. 1;
FIG. 7 is a view for illustrating a second case for the way of holding and operating the teaching pendant of FIG. 1;
FIG. 8 is a view for illustrating a third case for the way of holding and operating the teaching pendant of FIG. 1;
FIG. 9 is a view for illustrating a fourth case for the way of holding and operating the teaching pendant of FIG. 1; and
FIG. 10 is a plan view of a prior art teaching pendant.

### BEST MODE FOR CARRYING OUT THE INVENTION

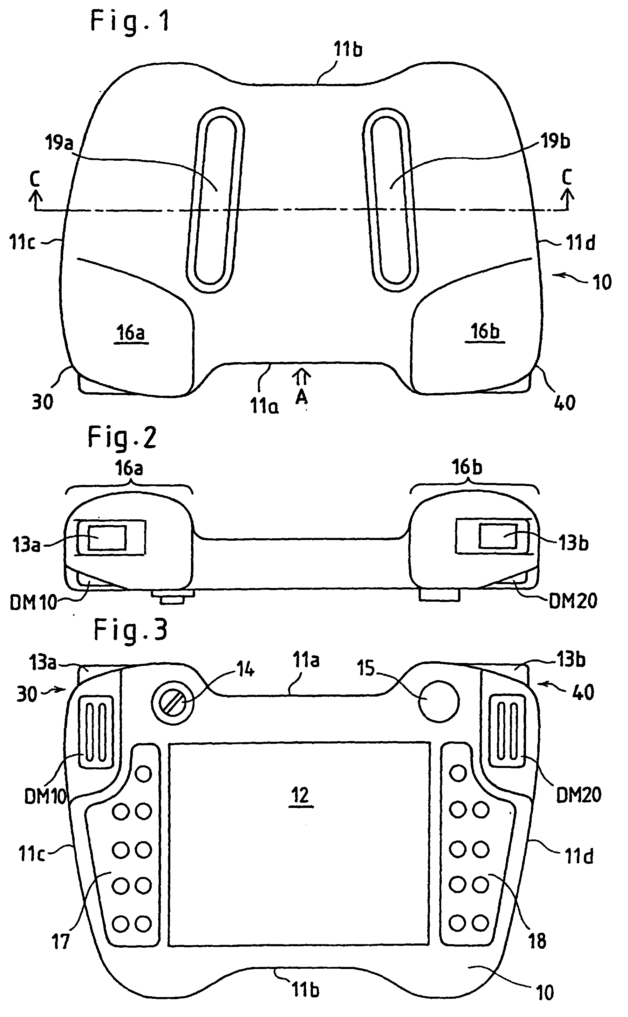

A teaching pendant according to a first embodiment of the present invention will be described with reference to FIGS. 1 to 5.

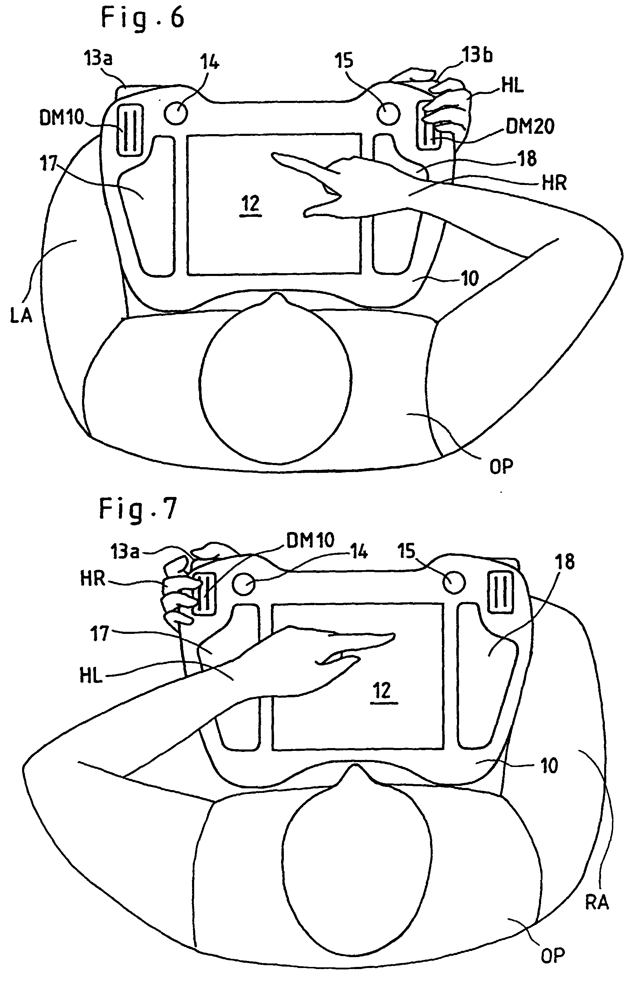

A body 10 of the teaching pendant is a substantially rectangular panel body that is surrounded by a front end 11a, rear end 11b, left-hand end 11c, and right-hand end 11d. The surface of the body 10 is fitted with an oblong display 12 in its center. When the teaching pendant (body 10) is held by a hand of an operator who stands in a position opposite the rear end 11b, as shown in FIG. 6, it is kept horizontal, so that the operator can view the display 12 from above.

Referring now to FIG. 3, elements provided on the surface of the body 10 of the teaching pendant will be described.

Conventional control key units 17 and 18 for manual operation of a robot are arranged individually on the left- and right-hand sides of the display 12 that is mounted in the center. Further, a first deadman switch DM10 is provided near a corner portion 30 where the front end 11a and the left-hand end 11c of the body intersect, while a second deadman switch DM20 is provided near a corner portion 40 where the front end 11a and the right-hand end 11d intersect. A power on-off switch 14 and an emergency stop button 15 are arranged in regions in the vicinity of the first and second deadman switches DM10 and DM20, respectively, and near the front end 11a. As seen from FIG. 3, the shape of the body 10 of the teaching pendant and the configuration of the individual elements (i.e., structure of the teaching pendant) on the body 10 are bisymmetrical (except for the emergency stop button 15 corresponding to the power on-off switch 14).

Referring now to FIG. 5, the layout of installation of the second deadman switch DM20 and elements surrounding the same will be described further.

That region of the surface of the body 10 of the teaching pendant near the corner portion 40 where the front end 11a and the right-hand end 11d intersect is in the form of a slope 43 that gradually declines toward the right-hand end 11d. The second deadman switch DM20 is mounted on the slope 43. Further, a switch setting section 42 is formed protruding from the front end 11a near the corner portion 40 so that it has a height about half that of the front end 11a. An operation-active switch 13b is attached to an end face of the switch setting section 42.

An attachment structure for the first deadman switch DM10 shown in FIG. 1 is identical with an attachment structure for the second deadman switch DM20. An operation-active switch 13a is also attached to a region near the first deadman switch DM10 by means of a structure similar to the one shown in FIG. 5.

Referring now to FIGS. 1 and 2, the shape of the back surface of the body 10 of the teaching pendant and elements arranged on the back surface will be described.

A first bulge portion 16a bulging downward is locally formed in the vicinity of the corner portion 30 where the front end 11a and the left-hand end 11c intersect. Likewise, a second bulge portion 16b bulging downward is also locally formed in the vicinity of the corner portion 40 where the front end 11a and the right-hand end 11d intersect. More specifically, as shown in FIG. 2, the first bulge portion 16a is formed in a position that faces the first deadman switch DM10 across the body 10, while the second bulge portion 16b is formed in a position that faces the second deadman switch DM20 across the body 10. Each of the bulge portions 16a and 16b has a size and roundness such that it fits the palm of each corresponding hand of the operator.

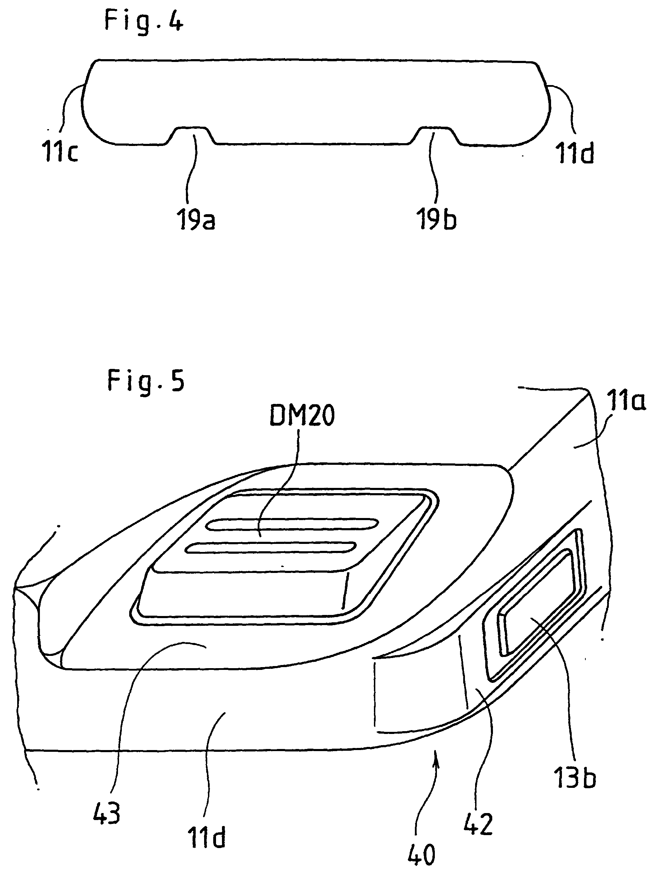

As shown in FIGS. 1 and 4, moreover, a first recess 19a and a second recess 19b, having a shape adapted to receive the four fingers except the thumb, are formed in a central portion that is not formed with the first and second bulge portions 16a and 16b.

Referring now to FIGS. 6 to 9, the use mode of the aforementioned teaching pendant will be described.

### [First Case: See FIG. 6]

An operator OP put his left arm LA under the body 10 of the teaching pendant and puts the palm of his left hand on the second (right-hand) bulge portion 16b. Thereupon, the other fingers of the left hand than the thumb extend from the right-hand end 11d to the outside, and their tips reach the second deadman switch DM20, as shown in FIG. 6. Accordingly, the second deadman switch DM20 is kept pressed by the left-hand fingers of the operator OP. In this state, the thumb is situated facing the operation-active switch 13b beside the second deadman switch DM20, so that it can operate the operation-active switch 13b.

The left arm bears the weight of the teaching pendant. Since the bulge portion 16b has a three-dimensional size such that it fits the palm of the hand, as mentioned before, the operator can hold the second bulge portion 16b putting the palm of his left hand over it, thereby securely fixing the teaching pendant in the left arm lest it slip off. In consequence, the operator is positioned such that he can easily continue to depress the deadman switch DM20.

Since a right hand HR is not concerned in the support of the teaching pendant or the operation of the deadman switches, it can manipulate a touch panel of the display 12 and operate the power on-off switch 14, emergency stop button 15, conventional control key units 17 and 18, etc.

### [Second Case: See FIG. 7]

The operator OP put his right arm RA under the teaching pendant and puts the palm of his right hand on the first (left-hand) bulge portion 16a. Thereafter, the operator is expected in the second case to use his right and left hands for the same operations that are caged out by his left and right hands, respectively, in the first case, so that a farther description of those operations is omitted.

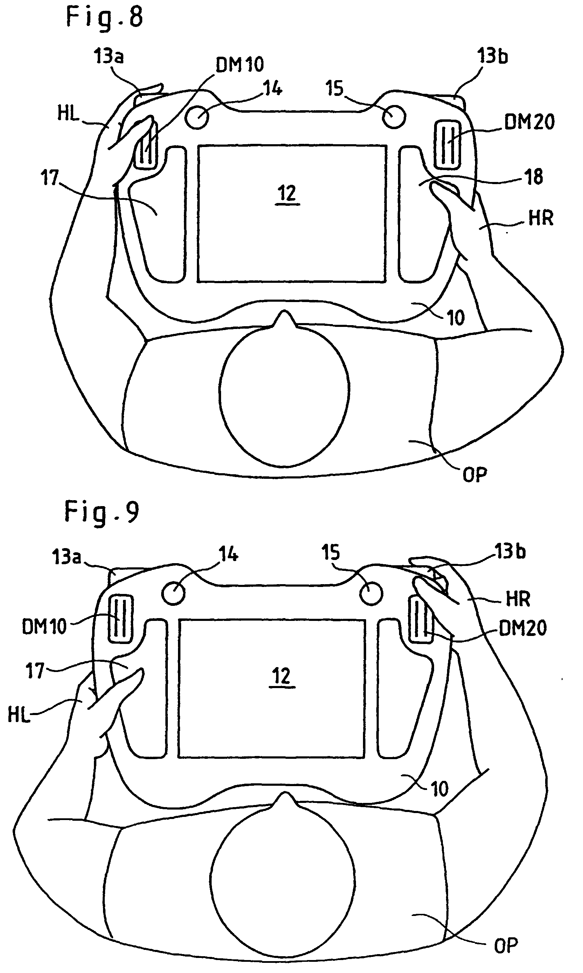

### [Third Case: See FIG. 8]

The operator uses his left hand HL to seize a part of the body 10 of the teaching pendant near the corner portion 30 where the front end 11a and the left-hand end 11c intersect, and grasps a substantially central portion of the right-hand end 11d with his right hand HR. Thus, the teaching pendant is supported by both hands.

In this state, the thumb of the left hand HL is situated in a position such that it can depress the first deadman switch DM10. Further, the forefinger can operate the operation-active switch 13a. The other fingers extend around the inside of the teaching pendant and are hooked over the first bulge portion 16a. The engagement between these fingers and the first bulge portion 16a prevents the teaching pendant from easily slipping off the left hand HL.

The respective tips of the other fingers of the right hand than the thumb penetrate the recess 19b (FIG. 1) in the back surface of the body 10, thereby fixing the teaching pendant.

Since the teaching pendant can be supported by the left hand HL only (or by bringing a part of the front end 11a into contact with the body of the operator), the right hand HR can be used to touch the touch panel of the display and operate the power on-off switch 14, emergency stop button 15, conventional control key units 17 and 18, etc.

### [Fourth Case: See FIG. 9]

The operator uses his right hand HR to seize a part of the teaching pendant near the corner portion 40 where the front end 11a and the right-hand end 11d intersect, and grasps a substantially central portion of the left-hand end 11c with his left hand HL. Thereafter, the operator is expected in the fourth case to use his right and left hands for the same operations that are carried out by his left and right hands, respectively, in the third case, so that a farther description of those operations is omitted.

In the teaching pendant shown in FIGS. 1 to 9, as described above, the same elements (first deadman switch DM10, first bulge portion 16a, operation-active switch 13a, and conventional switch 17) on its left-hand half are also located symmetrically on the right-hand half, so that the operator can use the teaching pendant in any of the first to fourth cases.

However, the teaching pendant can be designed to have only one of the first and second deadman switches DM10 and DM10. Although the corresponding one of the first and second bulge portions is need in the case where the teaching pendant has the first or second deadman switch only, the other bulge portion can be omitted.

The bulge portions 16a and 16b may be formed having the shape of a part of a sphere, as well as the shape shown in FIGS. 1 and 2. Further, it is necessary only that they be sized to fit the palm of the operator's hand.

As shown in FIG. 3, the rear end 11b of the body 10 of the teaching pendant is formed with a recess having the shape of a gentle curve such that it gradually deepens from its left- and right-hand ends toward the center. Therefore, the operator can support a part of the weight of the teaching pendant with a part of his body other than the hands by fitting the front portion of the abdomen into the recess.

While the pendant body is substantially in the shape of a rectangle, the circumference of which is defined by the front end 11a, rear end 11b, left-hand end 11c, and right-hand end 11d, the rear end 11b is shorter than the front end 11a, and the left- and right-hand ends extend individually declining inward from front to rear, so that the whole body is substantially trapezoidal. While the operator is operating the second deadman switch DM20 with his left-hand fingers, with his left arm LA putting under the body 10 of the teaching pendant, as shown in FIG. 6, therefore, the left arm LA softly touches the left-hand end 11c that extends inclining inward from front to rear, so that supporting the teaching pendant in the left arm LA produces no special sense of incompatibility.

## Claims

1. A robot teaching pendant comprising:
a teaching pendant body;
a display set in said teaching pendant body;
at least one deadman switch attached to said teaching pendant body; and
a bulge portion locally formed in the vicinity of a region of the teaching pendant body in which said deadman switch is set,
said bulge portion being formed in a position such that the respective tip portions of the fingers of an operator's hand can operate said deadman switch when the hand is put on said bulge portion.

2. A robot teaching pendant according to claim 1, wherein said deadman switch is provided on that face of said teaching pendant on which said display is set, and said bulge portion is formed on the opposite face.

3. A robot teaching pendant according to claim 2, wherein said deadman switch is attached to a front marginal region on said teaching pendant, and said bulge portion is formed in a position substantially opposite said deadman switch across said body.

4. A robot teaching pendant according to claim 3, wherein said region for the attachment of said deadman switch is in the form of a slope gradually declining from said teaching pendant face toward the left- or right-hand end.

5. A robot teaching pendant according to claim 1, wherein that face of said teaching pendant body opposite from the face in which said display is set is formed with at least one recess for receiving the fingers of the other hand of the operator than the hand on said bulge portion.

6. A robot teaching pendant according to claim 1, wherein the rear end of said pendant body is formed with a recess having the shape of a gentle curve such that the recess gradually deepens from the left- and right-hand ends thereof toward the center.

7. A robot teaching pendant according to claim 1, wherein said display is provided with a touch panel.

8. A robot teaching pendant according to claim 1, wherein said pendant body is substantially in the shape of a rectangle, the circumference of which is defined by the front end, rear end, left-hand end, and right-hand end, said rear end being shorter than said front end, and the left- and right-hand ends extending individually declining inward from front to rear, so that the whole body is substantially trapezoidal.
